# EUROPEAN PATENT APPLICATION

(11) **EP 2 012 309 A1**
(43) Date of publication of application: **07.01.2009**
(21) Application number: 08159596.9
(22) Date of filing: 03.07.2008
(51) Int. Cl.: G11B 7/0037, G11B 7/24, G11B 7/257

(54) **Optical recording medium**

(30) Priority: 04.07.2007 JP 2007176745; 04.07.2007 JP 2007176743; 09.07.2007 JP 2007180071; 01.05.2008 JP 2008119514
(71) Applicant: Ricoh Company, Ltd., Tokyo 143-8555 (JP)
(72) Inventor: Fuji, Toshishige, Tokyo 143-8555 (JP); Sekiguchi, Hiroyoshi, Tokyo 143-8555 (JP); Sasa, Noboru, Tokyo 143-8555 (JP); Hayashi, Yoshitaka, Tokyo 143-8555 (JP); Masayuki, Fujiwara, Tokyo 143-8555 (JP); Sasaki, Toshihide, Tokyo 143-8555 (JP)
(74) Representative: Barz, Peter

(57) **Abstract**

An optical recording medium including a first substrate, multiple information layers in which each of the multiple information layers except for an information layer located at a furthermost back relative to the side of laser beam irradiation includes a recording layer, an upper protective layer and an optical adjustment layer having an absorption index k of from 0.05 to 0.20 to a light having a wavelength of 405 nm arranged in this order from the side of laser beam irradiation; and intermediate layers provided between the multiple information layers.

## Description

### BACKGROUND OF THE INVENTION

### Field of the Invention

The present invention relates to an optical recording medium, and more particularly to a write once read many (WORM) optical recording medium in which dense recording is possible in a blue laser beam wavelength area.

### Discussion of the Background

Recently, a dual layer structure has been proposed to increase the data capacity of a write once read many (WORM) optical recording medium.

In such a situation, there is proposed a technology with regard to a WORM optical recording medium for a blue laser beam, which is a recording layer (inorganic layer) formed of mainly a bismuth oxide is provided instead of an organic material thin layer functioning as a heat generation layer by light absorption function and a recording layer which uses changes of refraction (real part of complex refraction index) ascribable to decomposition and alteration.

With regard to a WORM optical recording medium having a dual layer structure, when a laser beam does not sufficiently pass through the information layer (first information layer) situated in furthermost front from the laser beam irradiation side, information is not recorded on the recording layer of another information layer (second information layer) situated in furthermost back from the laser beam irradiation side. Therefore, the reflective layer forming the first information layer is desired to be excessively thin translucent reflective layer. However, when such a translucent layer is excessively thin (or not provided), the reflectivity decreases, resulting in difficulty in recording and playing.

Since Bi in the recording layer of the technology described above has a fast crystallization speed, it is desired to allow the heat to escape to a reflective layer adjacent to the recording layer, etc. to avoid excessive expansion of the marks in a traverse direction. That is, Bi is an element suitable for a rapid cooling-down structure. Thus, in a structure of dual layers, which is desired to have a thin reflective layer as described above, such a recording layer has a drawback that formation of minute marks is difficult.

In another technology, an Nb oxide is used as a material for a heat diffusion layer provided to let the heat escape. This technology is about a phase change optical recording medium (rewritable medium) in which recording and playing are repeated for a recording layer a number of times. By contrast, the WORM optical recording medium is designed to record only once, meaning the suitable structure thereof is different from that of the phase change optical recording medium. Thus, it is difficult to apply the structure of a phase change optical recording medium to a WORM optical recording medium.

In addition, an Nb oxide is used in another technology as a material for the upper protective layer of a dual layer optical recording medium but there is no description about using the Nb oxide as a heat diffusion layer. Furthermore, a translucent layer is used in the first information layer. Thus, this technology is to provide a recording medium suitable for a high linear speed by reducing the heat conduction of a transparent dielectric layer, which is different from the idea of letting the heat escape quickly.

There is another technology in which a layer (heat diffusion layer) formed of a nitride or a carbide having a relatively high heat conductivity and a low light absorption ratio is provided above a reflective layer to improve the heat diffusion function which is assumed by the reflective layer to make the structure function as a rapid cooling-down structure. This method is effective to solve the drawback described above which occurs when the reflective layer forming a first information layer is thinned.

However, the technology is related to a phase change optical recording medium and materials such as nitrides and carbides have a large internal stress so that the formed heat diffusion layer tends to crack. Consequently, a problem arises in the case of an optical disc having a heat diffusion layer that the overwriting characteristics are not good. Furthermore, the absorption index of carbide materials is large especially on the short wavelength side. This causes a problem for a next generation system such as a Blu-ray Disc using a bluish-violet laser beam that it is difficult to have a large light transmission ratio of the first information layer.

### SUMMARY OF THE INVENTION

Because of these reasons, the present inventors recognize that a need exists for an optical recording medium, especially a WORM optical recording medium, which has an easy and simple layer structure with a large refraction index and a small absorption index for a recording and playing wavelength at a high density recording and a high reflectivity, high sensitivity and good recording characteristics.

Accordingly, an object of the present invention is to provide an optical recording medium, especially a WORM optical recording medium, which has an easy and simple layer structure with a large refraction index and a small absorption index for a recording and playing wavelength at a high density recording and a high reflectivity, high sensitivity and good recording characteristics.

Briefly this object and other objects of the present invention as hereinafter described will become more readily apparent and can be attained, either individually or in combination thereof, by an optical recording medium including a first substrate, multiple information layers in which each of the multiple information layers except for the information layer located at the furthermost back relative to the side of laser beam irradiation includes a recording layer, an upper protective layer and an optical adjustment layer having an absorption index k of from 0.05 to 0.20 to a light having a wavelength of 405 nm arranged in this order from the side of laser beam irradiation, and intermediate layers provided between the multiple information layers.

It is preferred that, in the optical recording medium mentioned above, the optical adjustment layer includes an oxide of at least one element selected from the group consisting of Nb, In, Zn, Sn, Si, Al, W and Mn.

It is still further preferred that, in the optical recording medium mentioned above, the at least one element is Nb.

It is still further preferred that the optical recording medium mentioned above includes the first substrate, the first information layer, the intermediate layer, the second information layer and a second substrate arranged in this order from the side of laser beam irradiation.

It is still further preferred that, in the optical recording medium mentioned above, the second information layer includes a recording layer comprising an inorganic material, an upper protective layer, and a reflective layer arranged in this order from the side of laser beam irradiation, the optical adjustment layer of the first information layer includes a Nb oxide, the upper protective layer of the first information layer and the upper protective layer of the second information layer includes a mixture of ZnS and SiO₂ with a molar ratio (%) of from 60 : 40 to 80 : 20 and the upper protective layer of the second information layer has a thickness of from 10 to 30 nm or from 80 to 120 nm.

It is still further preferred that, in the optical recording medium mentioned above, the first information layer further includes a lower protective layer located in front of the recording layer relative to the side of laser beam irradiation, and an aluminum oxide layer located between the first substrate and the lower protective layer.

It is still further preferred that, in the optical recording medium mentioned above, the recording layer of each of the multiple information layers except for the information layer located at the furthermost back relative to the side of laser beam irradiation includes Bi.

It is still further preferred that, in the optical recording medium mentioned above, the recording layer of each of the multiple information layers except for the information layer located at the furthermost back from the side of laser beam irradiation includes a Bi oxide.

It is still further preferred that, in the optical recording medium mentioned above, the recording layer of each of the multiple information layers except for the information layer located at the furthermost back from the side of laser beam irradiation includes at least one element which improves the light absorption index k for a light having a wavelength of 405 nm to from 0.3 to 0.9.

It is still further preferred that, in the optical recording medium mentioned above, the at least one element which improves the light absorption index k is boron.

It is still further preferred that, in the optical recording medium mentioned above, the at least one element which improves the light absorption index k are boron and Ge.

It is still further preferred that, in the optical recording medium mentioned above, at least one element which improves the light absorption index k is Cu.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
Fig. 1 is a diagram illustrating an example of the basic layer structure of the WORM optical recording medium of the present invention having two information layers;
Fig. 2 is a diagram illustrating the relationship between the light transmission ratio and the recording sensitivity of the first information layer and the second information layer;
Fig. 3 is a diagram illustrating the parameters of the recording strategy;
Fig. 4 is a diagram illustrating a graph where the peak power and the absorption index k of the first recording layer and the second recording layer for light having a wavelength of 405 nm are plotted for Examples and Comparative Examples in Table 2 described later;
Fig. 5 is a diagram illustrating the dependency of the recording sensitivity and PRSNR of the first information layer on the thickness of the first recording layer;
Fig. 6 is a diagram illustrating the evaluation result of the second information layer of Example 34 described later;
Fig. 7 is a diagram illustrating the evaluation result of the first information layer of Example 34 described later;
Fig. 8 is a diagram illustrating the evaluation result of the first information layer of Example 35 described later;
Fig. 9 is a diagram illustrating the evaluation result of PRSNR of the first information layer of Example 37 described later;
Fig. 10 is a diagram illustrating the dual layer structure having a cover layer of Example 38 described later;
Fig. 11 is a diagram illustrating the triple layer structure having a cover layer of Example 41 described later; and
Fig. 12 is a diagram illustrating a multi-pulse strategy for use in Examples 34 to 41 and Comparative Example 5 described later.

### DETAILED DESCRIPTION OF THE INVENTION

The present invention will be described below in detail with reference to several embodiments and accompanying drawings.

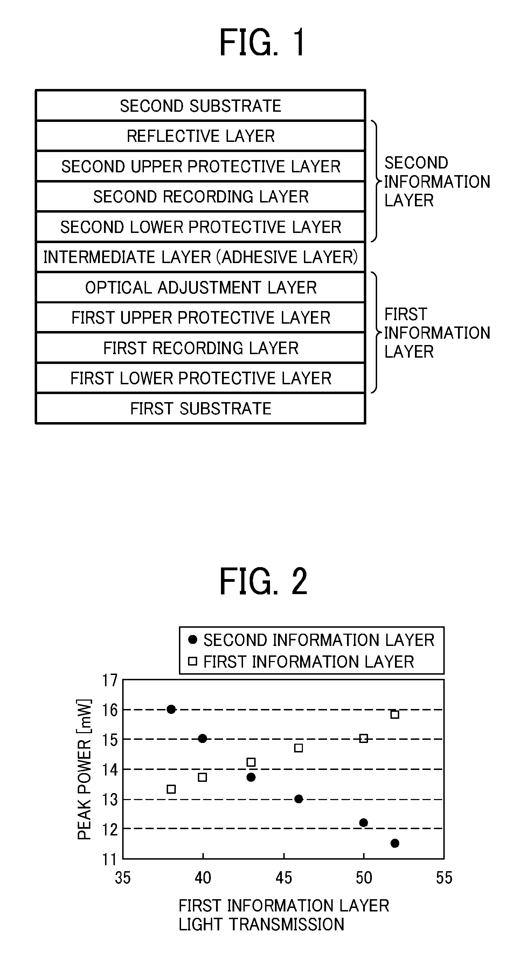

Fig. 1 is a diagram illustrating the basic layer structure of an example of the write once read many (WORM) optical recording medium of the present invention having two information layers (dual layer structure).

Each layer is described with reference to Fig. 1. In the case of a WORM optical recording medium having three or more information layers, each multiple information layer except for the information layer located at the furthermost back from the side of laser beam irradiation has the same structure as that of the first information layer of the dual layer optical recording medium unless otherwise specified. The information layer located at the furthermost back from the side of laser beam irradiation has the same structure as that of the second information layer of the dual layer optical recording medium.

The first information layer of a known dual layer optical recording medium typically has a layer structure of a first lower protective layer, a first recording layer, a first upper protective layer, a first reflective layer, and an optical adjustment layer. In this case, it is desired to make the first reflective layer, which has a high absorption index, thin and translucent to secure a sufficient light transmission of the first information layer. By contrast, in the present invention, there is provided above the first upper protective layer an optical adjustment layer formed of a material having a relatively small light absorption and a relatively high light transmission in comparison with the first upper protective layer and with an absorption index k of from 0.05 to 0.20 for light having a wavelength of 405 nm. By this optical adjustment layer, the first recording layer obtains sufficient recording sensitivity without a first reflective layer so that the light is not absorbed by the first reflective layer, resulting in sufficiently high light transmission. As a result, while securing a high reflectivity in the first information layer, light is efficiently absorbed and thus the first information layer has stable recording and playing characteristics.

When the absorption index k is too low, the light transmission of the first information layer tends to be excessively high, resulting in deterioration of the recording sensitivity of the first information layer. When the absorption index k is too high, a sufficient light transmission is not easily obtained due to the light absorption by the material itself, which tends to worsen the recording sensitivity of the second information layer. When a material having an absorption index k of from 0.05 to 0.20 for light having a wavelength of 405 nm is used, the refraction index n of the optical adjustment layer is normally from 2.0 to 4.0 but is not necessarily limited thereto.

As the material for use in the optical adjustment layer, it is preferred to use an oxide of at least one element selected from the group consisting of Nb, In, Zn, Sn, Si, Al, W and Mn. For example, Nb₂O₅ has a refraction index n of 2.22 and an absorption index k of 0.118 and In₂O₃ (90 mol %) - ZnO (10 mol %) has a refraction index n of 2.39 and an absorption index k of 0.06 for light having a wavelength of 405 nm.

The optical adjustment layer preferably has a thickness of from about 10 to about 60 nm. The reflectivity of an excessively thin optical adjustment layer tends to decrease. By contrast, the reflectivity of an excessively thick optical adjustment layer causes the absorption index of the first information layer to increase so that a sufficient light transmission is not obtained.

The first information layer assumes the main part of the light absorption function in the medium of the present invention.

A material having a normal dispersion is used in the first information layer. Since such a material does not have a large absorption band in a particular wavelength unlike an organic material, the complex refraction index of the material is not greatly dependent on wavelength. Consequently, typical drawbacks such as fluctuation of the recording characteristics such as recording sensitivity, modulation degree, jitter and error ratio, and reflectivity due to the variation in the recording and playing wavelength caused by the individual difference of laser light sources and the change in the environment temperature are significantly improved.

It is preferred to contain Bi or Bi oxides as the materials for the first information layer as the main component. When Bi or Bi oxide is the main component, Bi occupies 30 atom % or higher excluding the elements such as oxygen and nitrogen which form a compound with a metal or a half metal. For example, when the first information layer is formed of Bi, Fe and N, Bi occupies at least 30 % among the total amount of Bi and Fe excluding N. When the first information layer is formed of Bi, Fe and O, Bi occupies at least 30 % among the total amount of Bi and Fe excluding O.

The first information layer preferably has a thickness of from 2 to 25 nm and more preferably from 3 to 20 nm. When the layer thickness is too thin, a sufficient light absorption is not easily obtained, which leads to deterioration of the recording sensitivity. When the layer thickness is too thick, the recording characteristics tend to deteriorate.

It is preferred that the first recording layer includes Bi oxides as the main component and has an element that improves light absorption. The element that improves the light absorption can be contained in the form of an element itself or a compound. Specific examples thereof include, but are not limited to, oxides, carbides and nitrides. Preferred specific examples include, but are not limited to, boron and Cu. Ge can be contained with boron. Also, Ge can be contained instead of boron or Cu. By containing these elements, the absorption index k of the first information layer for light having a wavelength of 405 nm is from 0.3 to 0.9. Therefore, the recording sensitivity of the first information layer is improved and the contrast of the reflectivity between before and after recording is good. This results in a sufficient modulation degree. In addition, since the light transmission of the first information layer is sufficiently secured, the recording sensitivity of the recording on the second information layer is improved.

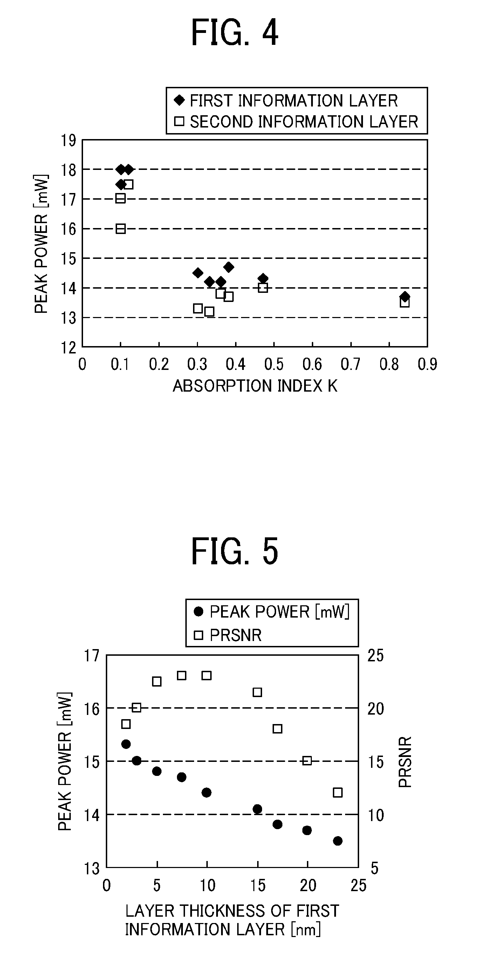

Fig. 4 is a diagram illustrating plots of the peak power (optimal recording power) and the absorption indices k of the first information layer and the second information layer for light having a wavelength of 405 nm in Examples and Comparative Examples in Table 2 shown later. The recoding linear speed is 13.22 m/s (corresponding to 2× of HD DVD-R).

As seen in Fig. 4, when the absorption index k of the first information layer is not less than 0.3, the recording sensitivity of the first information layer and the second information layer is good (the criterion is not greater than 15 mW).

When the absorption index k of the first information layer is greater than 0.9, the light transmission of the first information layer excessively decreases so that the recording sensitivity of the second information layer deteriorates, which is not preferred. As of today, there has been no material found which has an absorption index k greater than 0. 9 among Bi oxides and inorganic compounds containing an element that improves light absorption.

It is preferred that the first information layer contains at least one element selected from the group consisting of AL, Cr, Mn, Sc, In, Ru, Rh, Co, Fe, Ni, Zn, Li, Si, Zr, Ti, Hf, Sn, Pb, Mo, V and Nb. By containing such an element, it is possible to perform good recording by light having a blue wavelength.

The modulation degree is typically obtained by making the crystal structure in the unrecorded state different from the crystal structure of the recording mark in phase change recording. In the present invention, by forming the recording mark of a state in which crystals of at least two kinds of oxides coexist, for example, the refraction difference between the recording mark and the unrecorded portion is greater. Thus, the obtained modulation degree is large. Furthermore, the existence of the element of the oxides in addition to the oxides themselves makes the modulation degree further greater. Also, it is possible to restrain the crystal growth by coexistence of different elements and/or crystals having different crystal structures. That is, due to the coexistence of at least two different elements and/or crystals having different structures, a small recording mark can be formed without growing extensively.

The material for the first lower protective layer and the first upper protective layer is determined considering the refraction index, heat conductivity, chemical stability, mechanical strength, adhesiveness, etc. In general, oxides, sulfides, nitrides, carbides of a metal or semiconductor having a high transparency and a high melting point, or a fluoride of Ca, Mg, Li, etc. are used.

Specific examples thereof include, but are not limited to, metal oxides such as SiO, SiO₂, ZnO, SnO₂, Al₂O₃, TiO₂, In₂O₃, MgO, and ZrO₂, nitrides such as Si₃N₄, AIN, TiN, BN, and ZrN, sulfides such as ZnS, In₂S₃ and TaS₄, carbides such as SiC, TaC, B₄C, WC, TiC, and ZrC, diamond carbon, and a mixture thereof.

These materials can be used alone or in combination to form the first lower protective layer or the first upper protective layer. Impurities can be also contained, if desired. Specific examples thereof include, but are not limited to, a mixture of ZnS and SiO₂ and a mixture of Ta₂O₅ and SiO₂.

Especially, a mixture of ZnS and SiO₂ is used. The most preferred mixture molar ratio (%) of ZnS : SiO₂ is 80 : 20. This material has a high refraction index n and the extinction index thereof is almost 0. Therefore, the light absorption ratio of the first recording layer can be improved. In addition, since the heat conductivity is small, the diffusion of the heat generated during light absorption can be moderately restrained. Therefore, the temperature of the first information layer is raised to a temperature at which the first information layer is melted.

The first lower protective layer preferably has a thickness of from 10 to 70 nm. When the layer thickness thereof is too thin, the stability of playing light is not stable, which is not preferred. When the layer thickness thereof is too thick, the layer forming time tends to be long so that the first substrate is damaged by the heat, resulting in a large impact on the warp of the disc (optical medium) .

The first upper protective layer preferably has a thickness of from 10 to 40 nm. When the layer thickness thereof is too thin, the heat tends not to stay in the recording layer, resulting in deterioration of the recording sensitivity, which is not preferred.

In addition, when an Al oxide layer is provided between the first substrate and the first lower protective layer, the substrate noise can be restrained, which leads to improvement of the recording characteristics.

When the light transmission ratio of the first information layer in the range of from 40 to 50 %, the recording sensitivity of the first information layer and the second information layer is improved (refer to Fig. 2).

The light transmission of the first information layer varies depending on the refraction index n and the absorption index k of the materials and the layer thickness of each layer forming the first information layer. By having a light transmission ratio of the first information layer within the range of from 40 to 50%, both recording sensitivities of the first information layer and the second information layer are improved and can be set to be significantly the same.

The laser beam for recording and playing is preferred to sufficiently pass through the first substrate. Known technologies in the related art can be used. As the materials for the first substrate, glass, ceramics or resins are used in general. Resins are suitable in terms of moldability and cost.

Specific examples of the resins include, but are not limited to, polycarbonate resins, acrylic resins, epoxy resins, polystyrene resins, acrylonitrile-styrene copolymer resins, polyethylene resins, polypropylene resins, silicone resins, fluorine based resins, ABS resins, and urethane resins. Among these, polycarbonate resins and acryl based resins polymethyl methacrylate (PMMA) are preferred in light of moldability, optical characteristics, and cost.

On the side of the first substrate on which the first information layer is formed, there are provided a wobbling spiral or co-centric groove and concavoconvex patterns formed of land portions and groove portions.

Such substrates are formed of an ejection molding method or a photopolymer method and the groove of a stamper set in a die is transferred.

The first substrate preferably has a thickness of from about 70 to about 590 µm.

The second substrate can be formed of the same materials as those for the first substrate. A material opaque to the recording and playing light can be also used. In addition, the material and the groove form of the second substrate can be different from those of the first substrate.

There is no specific limit to the layer thickness of the second substrate. It is preferred to select a layer thickness for the second substrate such that the total thickness of the layer thickness of the first substrate and the layer thickness of the second substrate is 1.2 mm.

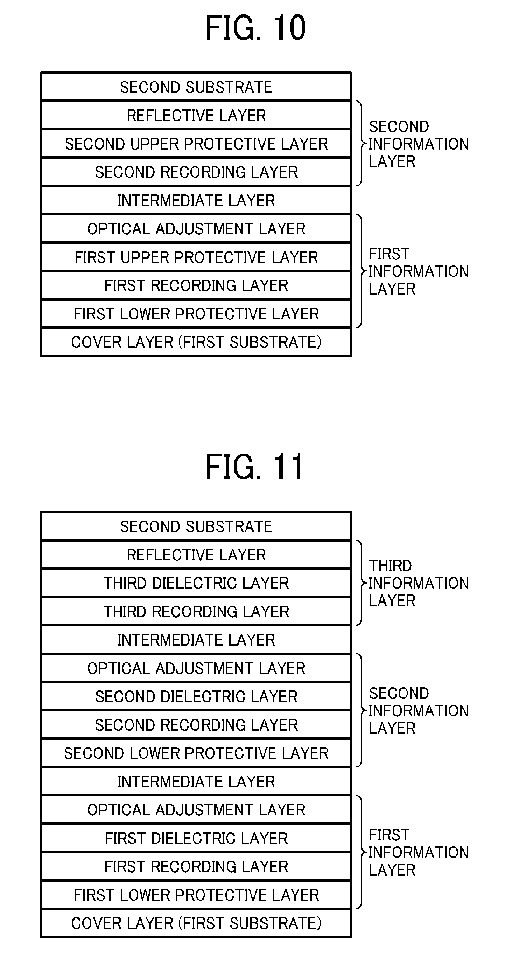

In the case in which a cover layer compliant to the Blu-Ray Disc as shown in Figs. 10 and 11 described later is provided, the cover layer corresponds to the first substrate described above.

It is preferred that the intermediate layer has a small light absorption index for the wavelength of a recoding and playing laser beam. As the material, resins are suitable in light of the moldability and the cost. Ultraviolet curing resins, delayed effective resins, thermoplastic resins, etc., can be used. In addition, a double sided adhesive tape (for example, adhesive sheet DA-8321, manufactured by Nitto Denko Corporation) for an optical disc can be also used.

The intermediate layer is for a pickup to distinguish the first information layer from the second information layer and optically separate the one from the other when recoding and playing. The layer thickness of the intermediate layer is preferably from 20 to 30 µm. When the layer thickness is too thin, a cross-talk between the information layers may occur. When the layer thickness is too thick, the spherical aberration tends to occur when recording or playing on the second recording layer, which may lead to difficulty in recording and playing.

A typical structure of the second information layer is a second lower protective layer, a second recording layer, a second upper protective layer and a reflective layer as illustrated in Fig. 1.

The second recording layer can be formed of a material having the same composition as that for the first recording layer or a different composition therefrom considering the characteristics such as the recording sensitivity, reflectivity and the modulation degree. That is, let alone a material mainly formed of Bi having a different composition from that of the first recording layer, a material formed of only Bi, an inorganic material other than Bi and an organic dye material can be also used.

The second lower protective layer can be omitted when the second recording layer is made of an inorganic material. When the second recording layer is made of an organic dye, it is suitable to provide a second lower protective layer to prevent dissolution of the organic dye in an ultraviolet curing resin liquid when attached.

The second recording layer preferably has a layer thickness of from 5 to 25 nm. When the second recording layer is too thin, the recording sensitivity tends to deteriorate. When the second recording layer is too thick, the recording characteristics tend to deteriorate.

The second lower protective layer and the second upper protective layer can be formed of the same materials as those for the first lower protective layer and the first upper protective layer described above. The mixture of ZnS and SiO₂ with a molar ratio (%) of 80 : 20 is also most preferred.

When the second information layer contains at least a second recording layer which is situated in the furthermost back from the irradiation side formed of an inorganic material suitable for optical recording, a second upper protective layer and a reflective layer, the optical adjustment layer of the first information layer includes a Nb oxide, and the first upper protective layer and the second upper protective layer include a mixture of ZnS and SiO₂ with a molar ratio (%) of from 60 : 40 to 80 : 20, it is preferred that the layer thickness (t1) of the first upper protective layer is from 10 to 40 nm and the layer thickness (t2) of the second upper protective layer is from 10 to 30 nm or from 80 to 120 nm.

By setting the layer thickness of each layer within the range mentioned above, the balance between the transmission of the first information layer and the reflectivity of the second information layer are optimized so that a high PRSNR, a high reflectivity, a high sensitivity, etc., can be obtained in both information layers with a relatively simple layer structure. When the layer thickness of each layer in the first information layer is out of the range, the transmission deteriorates in the first information layer, the sensitivity of the second information layer significantly worsens. PRSNR also deteriorates. When the layer thickness of each layer in the second information layer is out of the range, the reflectivity of the second information layer significantly increases so that the sensitivity of the second information layer and PRSNR deteriorate.

When the material for the first upper protective layer and the second upper protective layer is not a mixture of ZnS and SiO₂, the conditions mentioned above for the layer thickness is not applied.

The materials of the reflective layer preferably have a sufficiently high reflectivity for the wavelength of playing light. For example, metals such as Au, Al, Ag, Cu, Ti, Cr, Ni, Pt, Ta, Pd and alloys thereof can be used. Especially, Au, Al and Ag are suitable as a material having a high reflectivity. Other elements can be contained when the metals or alloys mentioned above are the main component. Specific examples of such other elements include, but are not limited to, metals or half metals such as Mg, Se, Hf, V, Nb, Ru, W, Mn, Re, Fe, Co, Rh, Ir, Zn, Cd, Ga, In, Si, Ge, Te, Pb, Po, Sn and Bi. Among these, a material containing Ag as the main component is suitable because the material is inexpensive and easy to obtain a high reflectivity.

In addition, the material other than metal can be used as a reflective layer having a form of a laminate layer structure in which a low refractive thin layer and a high refractive thin layer are alternately accumulated.

When Ag is used in the reflective layer and a ZnS-SiO₂ layer is provided adjacent thereto, S in the ZnS-SiO₂ layer gradually reacts with Ag, which may lead to deterioration of the characteristics and decrease of the reflectivity. Therefore, it is good to provide a layer (sulfuration prevention layer) between the reflective layer and the second upper protective layer to prevent the reaction. As the material for the sulfuration prevention layer, for example, oxides such as SiO, ZnO, SnO₂, Al₂O₃, TiO₃ and In₂O₃, nitrides such as Si₃N₄, AlN and TiN and carbides such as SiC can be used. Among these, SiC is a popular material and suitable as the material for use in the present invention.

The layer thickness of the reflective layer is preferably within the range of from 40 to 80 nm. When the layer thickness is too thin, the conductivity tends to decrease, which degrades the signal quality. An excessively thick reflective layer does not necessarily add a further special effect.

As the method of forming the reflective layer, there are methods of a sputtering method, an ion plating method, a chemical deposition method and a vacuum deposition method.

In addition to the layers described above, known organic or inorganic top coating layer, undercoating layer and/or adhesive layer can be provided above the substrate or below the reflective layer to improve the reflectivity, the recording characteristics and the adhesiveness.

Furthermore, it is possible to provide a protective layer on the reflective layer or between other constitutional layers, if desired.

As the materials for the protective layer, known materials can be used as long as the obtained protective layer has a protective function from the outer stress. For example, organic materials such as a thermoplastic resin, a thermocuring resin, an electron beam curing resin, an ultraviolet curing resin can be used. In addition, SiO₂, Si₃N₄, MgF₂, SnO₂, etc. can be specified as inorganic materials.

The protective layer has a thickness of from 0.1 to 100 µm and preferably from 3 to 30 µm. The protective layer can be formed by the same method as for the recording layer, for example, a coating method such as a spin coating method and a casting method, a sputtering method, and a chemical deposition method. Among these, the spin coating method is preferred.

A protective layer formed of a thermoplastic resin or a thermocuring resin can be formed by coating and drying a liquid application in which the resin is dissolved in a suitable solvent.

A protective layer of an ultraviolet curing resin can be formed by coating the ultraviolet resin or a liquid application in which the ultraviolet resin is dissolved in a suitable solvent followed by irradiation of ultraviolet for curing. As the ultraviolet resin, for example, acrylate resins such as urethane acrylate, epoxy acrylate, polyester acrylate can be used.

These materials can be used alone or in combination. The protective layer can be single layer structured or multiple layer structured.

The WORM optical recording medium of the present invention is manufactured by a layer forming process, an adhesion process, etc.

For example, when two information layers are included, the first information layer is formed on the side on which the groove of the first substrate is provided and the second information layer is formed on the side on which the groove of the second substrate is provided as illustrated in Fig. 1 in the layer forming process.

The first information layer and the second information layer are formed by various kinds of vapor growth methods such as a vacuum deposition method, a sputtering method, a plasma CVD method, an optical CVD method, an ion plating method, and an electron beam deposition method. Among these, a sputtering method is excellent in terms of mass productivity and the quality of a formed layer. In the sputtering method, generally a layer is formed while an inert gas such as Ar gas is flown. During this layer formation, reaction sputtering can be used by mixing oxygen, nitrogen, etc., in the atmosphere.

In the adhesion process, the first information layer and the second information layer are attached via an intermediate layer while facing the first information layer with the second information layer. For example, an ultraviolet resin is applied to one of the information layers and both substrates are pressed and adhered to each other followed by irradiation of an ultraviolet for curing the UV resin while both information layers are faced to each other.

When a cover layer is included, the second information layer is formed on the side on which the groove of the second substrate is provided and an intermediate layer (UV resin) is applied. Subsequent to formation of a groove by using a stamper, the first information layer is formed and the cover layer is formed.

When three information layers are included, for example, the third information layer, an intermediate layer, the second information layer, another intermediate layer, the first information layer are formed in this order on the second substrate. In this case, with regard to each of the intermediate layers, a UV resin is applied and a groove is formed by a stamper as in the structure including a cover layer and then the next information layer is formed. The layer forming of each information layer is the same as the described above.

Having generally described preferred embodiments of this invention, further understanding can be obtained by reference to certain specific examples which are provided herein for the purpose of illustration only and are not intended to be limiting.

### EXAMPLES

The present invention is specifically described with reference to Examples and Comparative Examples but is not limited to these Examples. The sputtering device used is a DVD sprinter manufactured by Unaxis Balzers AG.

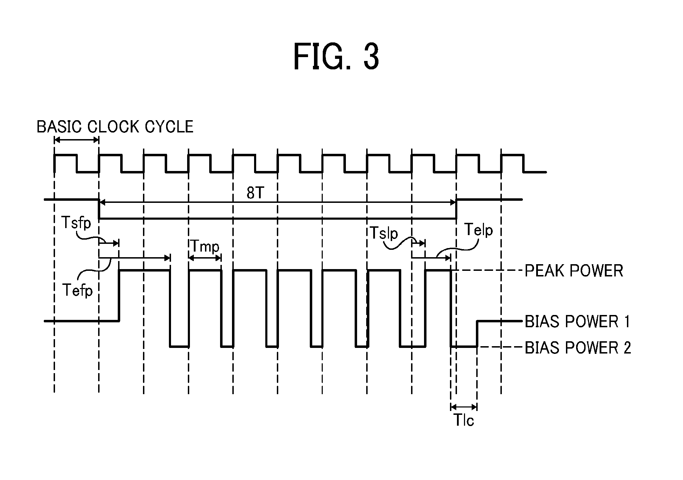

For evaluation of the recording characteristics of each optical recording medium, ODU1000 (manufactured by Pulstech Industrial Co., Ltd.) is used with a laser beam wavelength for recording of 405 nm and a numeric aperture NA of the objective lens of 0.65. The recording linear speed is 13.22 m/s and a laser beam power for playing is 0.8 mW. As an optical waveform device, MSG 3 (manufactured by Pulstech Industrial Co., Ltd.) is used. As the recording method, 1T cycle recording strategy illustrated in Fig. 3 is used. The recording condition on the first information layer is: TmP = 0.75 T; Bias power 1 = 5 mW; and Bias power 2 = 0.1 mW. The recording condition on the second information layer is: TmP = 0.81 T; Bias power 1 = 4 mW; and Bias power 2 = 0.1 mW. Recording is made on 5 tracks and the center track thereof is used for playing.

The evaluation items of the recording characteristics are peak power, PRSNR, sbER and I₁₁/I_{11H}. The peak power represents the optimal recording power and the acceptability criterion is not greater than 15 mW. PRSNR represents the quality of a signal when the signal processing system of PRML for HD-DVD is used and the acceptability criterion is not less than 15. SbER represents an error rate and the acceptability criterion is not greater than 0.00005 (5E-5) . I₁₁/I_{11H} represents the modulation degree where I_{11H} represents the reflectivity intensity of the unrecorded portion, I_{11L} represents the reflectivity intensity of the recorded portion and I₁₁ represents I_{11H} - I_{11L}- The acceptability criterion is not less than 40 %.

When Examples are measured by the evaluation device described above, the reflectivity of the first information layer and the second information layer is not less than 4.5 % in every Example. That is, well-balanced WORM optical recording media having two information layers are obtained in Examples.

### Example 1

On a first substrate formed of a polycarbonate resin which has a diameter of 12 cm, a thickness of 0.59 mm, and a continuous wobbling groove for tracking guide having a track pitch of 0.4 µm with a depth of 30 nm on one side, a first lower protective layer of a mixture of ZnS and SiO₂ with a molar ratio (%) of 80 : 20 having a thickness of 50 nm is formed by an RF magnetron sputtering method with a sputtering power of 4 kW in an Ar flowing rate of 15 sccm.

Next, with a sputtering power of 0.8 kW in an Ar flowing rate of 15 sccm, a first recording layer having a thickness of 7.5 nm is formed by an RF magnetron sputtering method using a Bi₂O₃ target.

Next, with a sputtering power of 4 kW in an Ar flowing rate of 15 sccm, a first upper protective layer of a mixture of ZnS and SiO₂ with a molar ratio (%) of 80 : 20 having a thickness of 20 nm is formed by an RF magnetron sputtering method.

Next, with a sputtering power of 2 kW in an Ar flowing rate of 15 sccm, an optical adjustment layer of a mixture of In₂O₃, ZnO, SnO₂ and SiO₂ with a molar ratio (%) of 8.8 : 41.7 : 35.2 : 14.3 having a thickness of 45 nm is formed by a DC magnetron sputtering method. Thus, a first information layer is formed.

On a second substrate formed of a polycarbonate resin which has a diameter of 12 cm, a thickness of 0 . 6 mm, and a continuous wobbling groove for tracking guide having a track pitch of 0.4 µm with a depth of 32 nm on one side, a reflective layer of a mixture of Ag and Bi with a weight ratio (%) of 99.5 : 0.5 having a thickness of 60 nm is formed by a DC magnetron sputtering method with a sputtering power of 3 kW in an Ar flowing rate of 20 sccm.

Next, with a sputtering power of 2 kW in an Ar flowing rate of 15 sccm, an interface layer (sulfuration prevention layer) of a mixture of TiC and TiO₂ with a molar ratio (%) of 70 : 30 having a thickness of 4 nm is formed by a DC magnetron sputtering method.

Next, with a sputtering power of 4 kW in an Ar flowing rate of 15 sccm, a second upper protective layer of a mixture of ZnS and SiO₂ with a molar ratio (%) of 80 : 20 having a thickness of 90 nm is formed by an RF magnetron sputtering method.

Next, with a sputtering power of 0.8 kW in an Ar flowing rate of 15 sccm, a second recording layer having a thickness of 9 nm is formed by an RF magnetron sputtering method using a Bi₂O₃ target.

Next, with a sputtering power of 4 kW in an Ar flowing rate of 15 sccm, a second lower protective layer of a mixture of ZnS and SiO₂ with a molar ratio (%) of 80 : 20 having a thickness of 70 nm is formed by an RF magnetron sputtering method. Thus, a second information layer is formed.

Next, an ultraviolet curing resin (KARAYAD DVD802, manufactured by Nippon Kayaku Co., Ltd.) is applied to the first information layer and the first information layer is attached to the second information layer on the second substrate via the ultraviolet curing resin. Subsequent to spin coating, the disc is irradiated with ultraviolet from the side of the first substrate for curing to have an intermediate layer having a thickness of 25 µm. Thus, the WORM optical recording medium having two information layers illustrated in Fig. 1 is manufactured.

The measuring results of the recording characteristics of this optical recording medium are shown in Table 1.

**Table 1**

| | Material for optical adjustment layer (mol %) | Refraction index n | Absorption index k | Information layer | Peak power (mW) | PRSNR | SbER | I₁₁/I_{11H} (%) |
|---|---|---|---|---|---|---|---|---|
| Example 1 | In₂O₃(8.8) - ZnO(41.7) - SnO₂(35.2) - SiO₂(14.3) | 2.03 | 0.08 | First | 14.5 | 23.2 | 1.8E-09 | 44.7 |
| | | | | Second | 13.3 | 24.9 | 9.4E-10 | 53.0 |
| Example 2 | In₂O₃(90) - ZnO(10) | 2.39 | 0.06 | First | 14.2 | 21.2 | 3.5E-08 | 44.2 |
| | | | | Second | 13.8 | 20.4 | 8.4E-09 | 62.1 |
| Example 3 | ZnO(98) - Al₂O₃(2) | 2.06 | 0.05 | First | 14.3 | 21 | 4.5E-08 | 42.2 |
| | | | | Second | 14 | 20.1 | 1.0E-08 | 57.4 |
| Example 4 | In₂O₃(16) - | 2.13 | 0.07 | First | 13.7 | 23 | 4.0E-09 | 43.5 |
| | ZnO(14) - SnO₂ (70) | | | Second | 13.5 | 24 | 2.5E-09 | 50.0 |
| Example 5 | In₂O₃ (99) - WO₃ (1) | 2.39 | 0.07 | First | 14.7 | 21.1 | 1.0E-06 | 42.3 |
| | | | | Second | 14.9 | 25.1 | 2.4E-09 | 58.1 |
| Example 6 | In₂O₃(12) - ZnO(80) - SnO₂ (8) | 2.11 | 0.08 | First | 14.5 | 19.6 | 5.4E-10 | 59.4 |
| | | | | Second | 15 | 22 | 2.1E-10 | 72.0 |
| Example 7 | ZnO(92) - MnO (6) - Al₂O₃(2) | 2.01 | 0.07 | First | 14.9 | 18.6 | 9.4E-09 | 50.0 |
| | | | | Second | 15 | 17.5 | 8.0E-09 | 70.0 |
| Comparative Example 1 | Ta₂O₅ | 2.2 | 0.012 | First | 15.4 | 14 | 9.4E-07 | 44.1 |
| | | | | Second | 14.5 | 18.5 | 7.0E-08 | 61.1 |
| Comparative Example 2 | Si₃N₄ | 1.75 | 0.004 | First | 16 | 10 | 9.0E-06 | 46.7 |
| | | | | Second | 14.5 | 17.5 | 8.0E-09 | 55.0 |
| | | 1.78 | 0.01 | First | 15.6 | 12 | 7.2E-08 | 46.2 |
| Comparative Example 3 | ZnO(92) - Al₂O₃(8) | 1.78 | 0.01 | First | 15.6 | 12 | 7.2E-08 | 46.2 |
| Comparative Example 3 | | | | 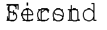 | 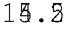 | 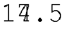 | 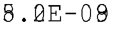 | 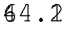 |
| | | | | Second | 14.5 | 19.5 | 8.0E-09 | 59.4 |

### Examples 2 to 7 and Comparative Examples 1 to 4

WORM optical recording media having two information layers of Examples 2 to 7 and Comparative Examples 1 to 4 are manufactured in the same manner as in Example 1 except that the material for the optical adjustment layer is changed to the compositions shown in Table 1. The measured results of optical constants (absorption index k and refraction index n) of each material for the optical adjustment layers by spectroscopic ellipsometer for a laser beam having a wavelength of 405 nm are shown in Table 1.

As seen in the recording characteristics of each optical recording media are shown in Table 1, since the absorption index k of the optical adjustment layer in Comparative Examples 1 to 4 are out of the range described above, the peak power and PRSNR thereof do not satisfy the acceptability criteria.

In the WORM optical recording media having two information layers (for example, Example 34) manufactured in the same manner as in Example 1 except that the materials for the optical adjustment layer are changed to Nb₂O₅ (absorption index k is 0.118 and refraction index n is 2.22), peak power and PRSNR thereof are also good. The details are described later.

### Examples 8 to 14

The WORM optical recording media having two information layers of Examples 8 to 14 are manufactured in the same manner as in Examples 1 to 7 except that an Al₂O₃ layer having a layer thickness of 10 nm is formed between the first substrate and the first lower protective layer.

PRSNR is measured for the WORM optical recording media. The results are that PRSNR of Examples 8 to 14 increases by 4 to 6 in comparison with that of Examples 1 to 7.

### Example 15

On a first substrate formed of a polycarbonate resin which has a diameter of 12 cm, a thickness of 0.59 mm, and a continuous wobbling groove for tracking guide having a track pitch of 0.4 µm with a depth of 30 nm on one side, a first lower protective layer of a mixture of ZnS and SiO₂ with a molar ratio (%) of 80 : 20 having a thickness of 50 nm is formed by an RF magnetron sputtering method with a sputtering power of 4 kW in an Ar flowing rate of 15 sccm.

Next, with a sputtering power of 0.8 kW in an Ar flowing rate of 15 sccm, a first recording layer having a thickness of 7.5 nm is formed by an RF magnetron sputtering method using a target having the composition ratio shown in Table 2. The results (absorption index k and refraction index n of each material for the recording layers measured by spectroscopic ellipsometer are shown in Table 2.

Next, with a sputtering power of 4 kW in an Ar flowing rate of 15 sccm, a first upper protective layer of a mixture of ZnS and SiO₂ with a molar ratio (%) of 80 : 20 having a thickness of 20 nm is formed by an RF magnetron sputtering method.

Next, with a sputtering power of 2 kW in an Ar flowing rate of 15 sccm, an optical adjustment layer of a mixture of In₂O₃ and ZnO with a molar ratio (%) of 90 : 10 having a thickness of 45 nm is formed by a DC magnetron sputtering method. Thus, a first information layer (L0 layer) is formed.

On a second substrate formed of a polycarbonate resin which has a diameter of 12 cm, a thickness of 0.6 mm, and a continuous wobbling groove for tracking guide having a track pitch of 0.4 µm with a depth of 32 nm on one side, a reflective layer of a mixture of Ag and Bi with a weight ratio (%) of 99.5 : 0.5 having a thickness of 60 nm is formed by a DC magnetron sputtering method with a sputtering power of 3 kW in an Ar flowing rate of 20 sccm.

Next, with a sputtering power of 2 kW in an Ar flowing rate of 15 sccm, an interface layer (sulfuration prevention layer) of a mixture of TiC and TiO₂ with a molar ratio (%) of 70 : 30 having a thickness of 4 nm is formed by a DC magnetron sputtering method.

Next, with a sputtering power of 4 kW in an Ar flowing rate of 15 sccm, a second upper protective layer of a mixture of ZnS and SiO₂ with a molar ratio (%) of 80 : 20 having a thickness of 90 nm is formed by an RF magnetron sputtering method.

Next, with a sputtering power of 0.8 kW in an Ar flowing rate of 15 sccm, a second recording layer having a thickness of 9 nm is formed by an RF magnetron sputtering method using the same target as that for the first recording layer.

Next, with a sputtering power of 4 kW in an Ar flowing rate of 15 sccm, a second lower protective layer of a mixture of ZnS and SiO₂ with a molar ratio (%) of 80 : 20 having a thickness of 70 nm is formed by an RF magnetron sputtering method. Thus, a second information layer (L1 layer) is formed.

Next, an ultraviolet curing resin (KARAYAD DVD802, manufactured by Nippon Kayaku Co., Ltd.) is applied to the first information layer and the first information layer is attached to the second information layer on the second substrate via the ultraviolet curing resin. Subsequent to spin coating, the disc is irradiated with ultraviolet from the side of the first substrate for curing to have an intermediate layer having a thickness of 25 µm. Thus, the WORM optical recording medium having two information layers illustrated in Fig. 1 is manufactured.

The measuring results of the recording characteristics of this optical recording medium are shown in Table 2.

**Table 2**

| | Target composition ratio for recording layer (mol %) | Refraction index n | Absorption index k | Information layer | Peak power (mW) | PRSNR | SbER | I₁₁/I_{11H} (%) |
|---|---|---|---|---|---|---|---|---|
| Example 15 | Bi₂O₃(67) - B₂O₃(33) | 2.35 | 0.38 | First | 14.7 | 23 | 2.0E-09 | 42.1 |
| | | | | Second | 13.7 | 23.5 | 4.2E-10 | 59.1 |
| Example 16 | Bi₂O₃(65) - B₂O₃(30) - B₄C(5) | 2.33 | 0.30 | First | 14.5 | 23.2 | 1.8E-09 | 44.7 |
| | | | | Second | 13.3 | 24.9 | 9.4E-10 | 53 |
| Example 17 | Bi₂O₃(50) - Cu(50) | 2.91 | 0.36 | First | 14.2 | 21.2 | 3.5E-08 | 44.2 |
| | | | | Second | 13.8 | 20.4 | 8.4E-09 | 62.1 |
| Example 18 | Bi₂O₃(65) - | 2.2 | 0.47 | First | 14.3 | 21 | 4.5E-08 | 42.2 |
| | B₂O₃(30) - Ge (5) | | | Second | 14 | 20.1 | 1.0E-08 | 57.4 |
| Example 19 | Bi (50) - Bi₂O₃ (25) - B₂O₃ (25) | 2.08 | 0.84 | First | 13.7 | 23 | 4.0E-09 | 43.5 |
| | | | | Second | 13.5 | 24 | 2.5E-09 | 50 |
| Example 20 | Bi₂O₃ (90) - B₄C (10) | 2.3 | 0.33 | First | 14.2 | 23.2 | 2.8E-09 | 46.5 |
| | | | | Second | 13.2 | 24.9 | 7.3E-09 | 52.8 |

### Examples 16 to 20

WORM optical recording media having two information layers of Examples 16 to 20 are manufactured in the same manner as in Example 15 except that the target for the recording layer is changed to the compositions shown in Table 2. The measured results of optical constants (absorption index k and refraction index n) of each material for the recording layers by spectroscopic ellipsometer for a laser beam having a wavelength of 405 nm are shown in Table 2.

The recording characteristics of each optical recording media are shown in Table 2.

### Examples 21 to 28

WORM optical recording media of Examples 21 to 28 are manufactured in the same manner as in Example 15 except that the layer thickness (7.5 nm) of the recording layer of the first information layer is changed to 2 nm, 3 nm, 5 nm, 10 nm, 15 nm, 17 nm, 20 nm and 23 nm.

The recording sensitivity and PRSNR are measured for these media and the results thereof are shown in Fig. 5 and Table 3. Table 3

| | Thickness of first recording layer (nm) | Peak power (mW) | PRSNR |
|---|---|---|---|
| Example 21 | 2 | 15.3 | 18.5 |
| Example 22 | 3 | 15 | 20 |
| Example 23 | 5 | 14.8 | 22.5 |
| Example 15 | 7.5 | 14.8 | 23 |
| Example 24 | 10 | 14.4 | 23 |
| Example 25 | 15 | 14.1 | 21.5 |
| Example 26 | 17 | 13.8 | 18 |
| Example 27 | 20 | 13.7 | 15 |
| Example 28 | 23 | 13.5 | 12 |

In Example 21, the optimal recording power is greater than 15 mW but PRSNR is good. In addition, Example 28, PRSNR is smaller than 15 but the recording sensitivity is good. Judging from these results, the first recording layer preferably has a thickness of from 3 to 20 nm.

### Examples 29 to 33

The WORM optical recording media having two information layers of Examples 29 to 33 are manufactured in the same manner as in Examples 15 to 19 except that an Al₂O₃ layer having a layer thickness of 10 nm is formed between the first substrate and the first lower protective layer.

PRSNR is measured for the WORM optical recording media. The results are that PRSNR of Examples 29 to 33 increases by 4 to 6 in comparison with that of Examples 15 to 19.

### Example 34

A first substrate and a second substrate having a diameter of 120 mm and a thickness of 0.59 mm formed of a polycarbonate resin which have a guide groove with a track pitch of 0.40 µm and a depth of the groove of 21 nm on the surface are prepared.

Next, by using a cluster type sputtering system (manufactured by Unaxis Balzers AG), a firs information layer is manufactured by forming a first lower protective layer formed of a mixture of ZnS and SiO₂ with a molar ratio (%) of 80 : 20 having a thickness of 40 nm on the first substrate, a first recording layer formed of Bi₂O₃ having a thickness of 20 nm on the first lower protective layer, a first upper protective layer (t1) formed of a mixture of ZnS and SiO₂ with a molar ratio (%) of 80 : 20 having a thickness of 20 nm on the first recording layer and an optical adjustment layer formed of Nb₂O₅ having a thickness of 45 nm on the first upper protective layer.

Similarly, a second information layer is manufactured by forming a reflective layer formed of Ag having a thickness of 80 nm on the second substrate, a second upper protective layer (t2) formed of a mixture of ZnS and SiO₂ with a molar ratio (%) of 80 : 20 having a thickness of from 5 to 140 nm on the reflective layer, and a second recording layer formed of Bi₂O₃ having a thickness of 20 nm on the second upper protective layer.

Next, a liquid application containing an ultraviolet curing resin (DVD003, manufactured by Nippon Kayaku Co., Ltd.) is applied to the first information layer and the second information layer by spin coating. The two information layers are attached to each other in an atmosphere with a reduced pressure. Thereafter, the disc is irradiated with ultraviolet from the first substrate side to cure the ultraviolet curing resin. Thus, an intermediate layer having a thickness of 25 µm is formed.

Thus, the WORM optical recording medium in which the first substrate, the first information layer, the intermediate layer, the second information layer and the second substrate are accumulated in this sequence is obtained.

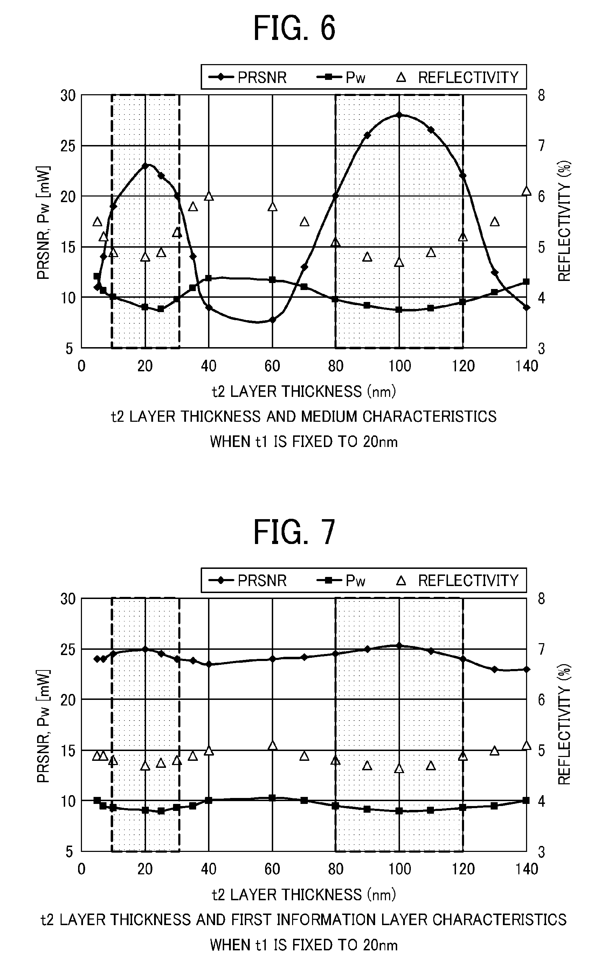

ODU-1000 (manufactured by Pulstech Industrial Co., Ltd.) is used as an evaluation device for the medium manufactured above. The first information layer and the second information layer are evaluated for a recording of a random pattern with a laser beam wavelength of 405 nm, a numeric aperture NA of 0.6 and a clock frequency of 64.8 MHz while the WORM optical disc is rotated at a linear speed of 6.61 m/s. The evaluation results are shown in Fig. 6 for the second information layer and in Fig. 7 for the first information layer. In this evaluation, while the second recording power is fixed to 3 mW, the first recording power varies. The Y axis in Fig. 6 represents recording power corresponding to the optimal PRSNR value, that is, the optimal recording power (Pw), and PRSNR at the Pw. The X axis in Fig. 6 represents the layer thickness (t2) of the second upper protective layer.

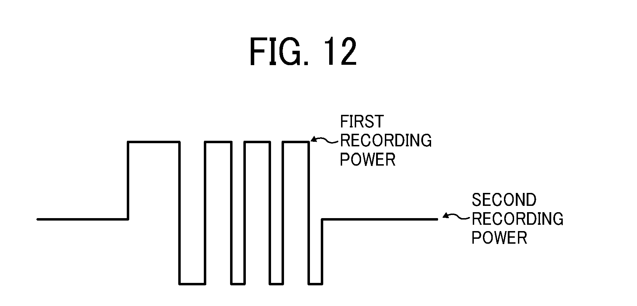

As to the recording strategy, the multi-pulse system as illustrated in Fig. 12 is selected.

With regard to the evaluation, according to the HD DVD-R DL specification (DVD Specifications for High Density Recordable Disc for Dual Layer Ver. 1.0), a PRSNR value less than 15 is out of the specification and a recording power value not less than 13 mW is out of the specification. Taking into account the variance of samples, the layer thickness at which PRSNR and the optimal recording power (sensitivity) are sufficiently qualified is a prerequisite for the present invention.

In Fig. 6, when the layer thickness (t2) of the second upper protective layer is from 10 to 30 nm and from 80 to 120 nm, PRSNR and the recording power values are well within the acceptability limit. This is true to the first upper protective layer having a layer thickness of from 10 to 40 nm.

In this Example, while the layer thickness of the first information layer is fixed, only the layer thickness (t2) of the second upper protective layer varies, which has a large impact on the second information layer but little impact on the first information layer. This is shown in Fig. 7 for reference that there is no specific change in the data of the characteristics for the first information layer.

### Example 35

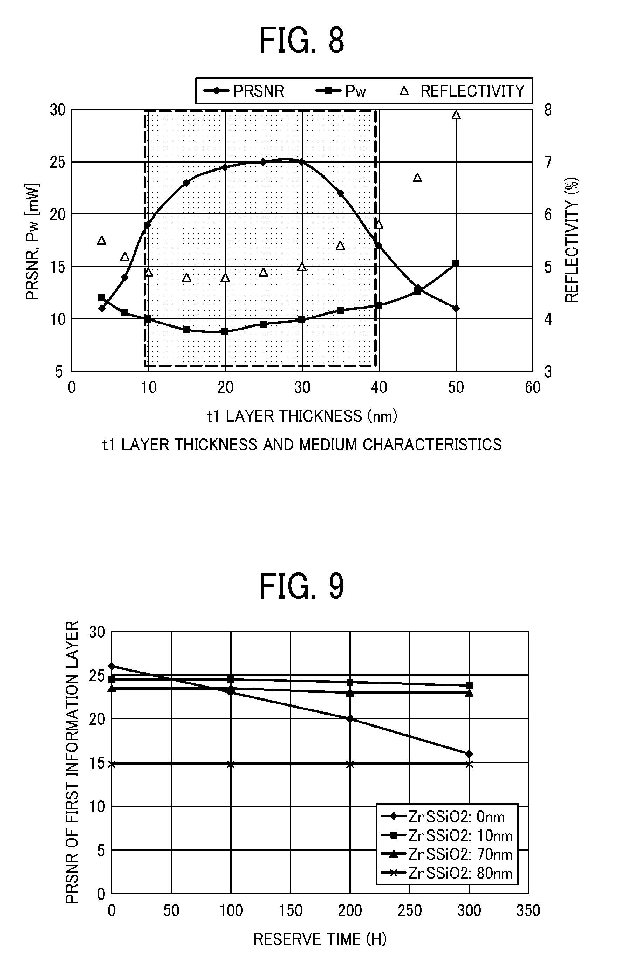

The layer thickness (t2) of the second upper protective layer is fixed to 90 nm, and the layer thickness (t1) of the first upper protective layer is changed in the range of from 4 to 40 nm. The evaluation result of a random pattern writing on the first information layer is shown in Fig. 8. In this evaluation, the first recording power is changed while the second recording power is fixed to 4.2 mW. The Y axis in Fig. 8 represents the recording power corresponding to the optimal PRSNR value, that is, the optimal recording power (Pw), and PRSNR at the Pw. The X axis in Fig. 8 represents the layer thickness (t1) of the first upper protective layer.

As seen in Fig. 8, when the layer thickness (t1) of the first upper protective layer is from 10 to 40 nm, PRSNR and the recording power values are well within the acceptability limit.

### Example 36

The WORM optical recording medium having two information layers is manufactured in the same manner as in Example 34 except that Al, Cr, Mn, Sc, In, Ru, Rh, Co, Fe, Ni, Zn, Li, Si, Zr, Ti, Hf, Sn, Pb, Mo, V and Nb are added to Bi₂O₃ of the first recording layer and the second information layer and the layer thickness (t2) of the second upper protective layer is 90 nm. The results are evaluated in the same manner as in Example 34 and shown in Table 4.

As seen in Table 4, it is possible to further improve PRSNR and the optimal recording power (sensitivity) by adding these elements.

**Table 4**

| Element contained in recording layer | First information layer | | Second information layer | |
|---|---|---|---|---|
| | PRSNR | Optimal recording power (mW) | PRSNR | Optimal recording power (mW) |
| Al | 24 | 9 | 28 | 8.8 |
| Cr | 24 | 9.5 | 28 | 9.3 |
| Mn | 25 | 9.2 | 29 | 9 |
| Sc | 24 | 9.2 | 28 | 9 |
| In | 23 | 8.8 | 28 | 8.6 |
| Ru | 24 | 9 | 28 | 8.8 |
| Rh | 24 | 9.2 | 28 | 9 |
| Co | 25 | 8.9 | 29 | 8.7 |
| Fe | 27 | 8.7 | 30 | 8.5 |
| Ni | 25 | 8.9 | 30 | 8.7 |
| Zn | 26 | 9.2 | 29 | 9 |
| Li | 26 | 9.9 | 28 | 9.7 |
| Si | 26 | 10.2 | 28 | 10 |
| Zr | 24 | 9.2 | 28 | 9 |
| Ti | 24 | 9.5 | 28 | 9.3 |
| Hf | 24 | 9.4 | 28 | 9.2 |
| Sn | 25 | 9.3 | 28 | 9 |
| Pb | 26 | 9 | 29 | 8.8 |
| Mo | 26 | 9.1 | 28 | 8.8 |
| V | 24 | 9.4 | 28 | 9.1 |
| Nb | 25 | 9 | 30 | 8.8 |

### Example 37

The WORM optical recording medium having two information layers is manufactured in the same manner as in Example 34 except that the layer thickness of the first lower protective layer is changed to 0, 10, 70 and 80 nm. A preservation test is performed for the disc at 80 °C and a humidity of 85 % in a constant temperature bath.

For each optical recording medium, PRSNR of the first information layer is measured in the same manner as in Example 34 at the start of the preservation test, 100 hours after, 200 hours after, and 300 hours after the start of the preservation test. The results are shown in Fig. 9.

As seen in Fig. 9, the signal characteristics (PRSNR) deteriorate over time when no first lower protective layer is provided but the acceptability limit is still satisfied. By contrast, when a first lower protective layer is provided, good signal characteristics are obtained for an extended period of time and maintained until the layer thickness thereof increases to 70 m.

However, when the layer thickness is 80 nm, the signal characteristics deteriorate. Each of the layer thickness of an optical recording medium is optimally determined considering the transmission index k and refraction index n of the first lower protective layer. However, it is found that when the layer thickness of the first lower protective layer is 80 nm, the optimal combination of each layer thickness is off-balanced so that good characteristics are not obtained for the first information layer.

In addition, it is confirmed that when the material of the first lower protective layer is changed to Al₂O₃, In₂O₃ and SnO₂, significantly the same results are obtained.

### Example 38

A WORM Blu-ray recording medium having two information layers is manufactured in the following manner.

A second substrate formed of a polycarbonate resin having a diameter of 120 mm and a thickness of 1.1 mm with a guide groove having a track pitch of 0.32 µm and a depth of 21 nm on the surface is prepared.

Next, by using a cluster type sputtering system (manufactured by Unaxis Balzers AG), a second information layer is manufactured by forming a reflective layer formed of Ag having a thickness of 80 nm on the second substrate, a second upper protective layer formed of a mixture of ZnS and SiO₂ with a molar ratio (%) of 80 : 20 having a thickness (t2) of from 5 to 140 nm on the reflective layer, and a second recording layer formed of Bi₂O₃ having a thickness of 20 nm on the second upper protective layer.

Next, a liquid application containing an ultraviolet curing resin (RQ1006, manufactured by Mitsubishi Rayon Co., Ltd.) is spin coated on the second information layer, to which an optical transmission stamper is attached in an atmosphere with a reduced pressure. Next, the disc is irradiated with ultraviolet from the stamper side to cure the ultraviolet curing resin. The optical transmissive stamper is peeled off and an intermediate layer having a thickness of 25 µm with the same groove as that of the second substrate is formed.

Next, a first information layer is manufactured by forming an optical adjustment layer formed of Nb₂O₅ having a thickness of 50 nm on the intermediate layer, a first upper protective layer formed of a mixture of ZnS and SiO₂ with a molar ratio (%) of 80 : 20 having a thickness (t1) of 20 nm on the optical adjustment layer, a first recording layer formed of Bi₂O₃ having a thickness of 20 nm on the first upper protective layer, and a first lower protective layer formed of a mixture of ZnS and SiO₂ with a molar ratio (%) of 80 : 20 having a thickness of 40 nm on the first recording layer.

Next, to form a cover layer, a cover film formed of a polycarbonate resin having a thickness of 0.09 mm is attached to the first information layer with an ultraviolet curing resin (RQ1006, manufactured by Mitsubishi Rayon Co., Ltd.) followed by irradiation of ultraviolet for curing the ultraviolet curing resin.

As described above, a WORM optical recording medium having two information layers on which the cover layer, the first information layer, the intermediate layer, the second information layer and the second substrate are accumulated in this order is manufactured (Refer to Fig. 10).

The optical recording medium is evaluated for a writing of random patterns with a laser beam wavelength of 405 nm, a numeric aperture NA of the objective lens of 0.85, and a clock frequency of 66 MHz while the optical recording medium is rotated at a linear speed of 4.92 m/s. Jitter of recording marks is measured for evaluation.

The result is that the jitter is 5.1 %, which satisfies the acceptability limit (7.0 % or below) for Blu-ray.

Blu-ray specification is "System Description Blu-Ray Disc Recordable Format Part 1 Basic Format Specification Ver. 1.19".

### Example 39

The WORM optical recording medium is manufactured and evaluated in the same manner as in Example 34 except that the materials for the first information layer and the second information layer are changed to BiN.

As a result, the medium has the same characteristics as those for Example 34 and the behaviors of the reflectivity and PRSNR are the same as well. Also, the range of the combination of the optimal (t1) and (t2) is the same.

### Example 40

The WORM optical recording medium is manufactured and evaluated in the same manner as in Example 34 except that the materials for the first information layer and the second information layer are changed to TeOPd.

As a result, the medium has the same characteristics as those for Example 34 and the behaviors of the reflectivity and PRSNR are the same as well. However, in comparison with Example 34, PRSNSR deteriorates by 5 overall. The range of the combination of the optimal (t1) and (t2) is the same.

### Comparative Example 5

The WORM optical recording medium is manufactured in the same manner as in Example 34 except that the optical adjustment layer formed of Nb₂O₅ is not provided. In attempts to evaluate the medium, it is not possible to record random patterns.

The optical adjustment layer formed of Nb₂O₅ of the present invention also has a function of a reflective layer, which is to boost the reflectivity of the first information layer and let the heat generated during recording escape. This is confirmed by Comparative Example 5.

### Example 41

A WORM Blu-ray recording medium having three information layers is manufactured in the following manner.

A second substrate formed of a polycarbonate resin having a diameter of 120 mm and a thickness of 1.1 mm with a guide groove having a track pitch of 0.32 µm and a depth of 21 nm on the surface is prepared.

Next, by using a cluster type sputtering system (manufactured by Unaxis Balzers AG), a third information layer is manufactured by forming a reflective layer formed of Ag having a thickness of 80 nm on the second substrate, a third upper protective layer formed of a mixture of ZnS and SiO₂ with a molar ratio (%) of 80 : 20 having a thickness (t3) of 100 nm on the reflective layer, and a third recording layer formed of Bi₂O₃ having a thickness of 20 nm on the third upper protective layer.

Next, a liquid application containing an ultraviolet curing resin (RQ1006, manufactured by Mitsubishi Rayon Co., Ltd.) is spin coated on the third information layer, to which an optical transmissive stamper is attached in an atmosphere with a reduced pressure. Next, the disc is irradiated with ultraviolet from the stamper side to cure the ultraviolet curing resin. The optical transmission stamper is peeled off and an intermediate layer having a thickness of 25 µm with the same groove as that of the second substrate is formed.

Next, a second information layer is manufactured by forming an optical adjustment layer formed of Nb oxides including Nb₂O₅ having a thickness of 50 nm on the intermediate layer, a second upper protective layer formed of a mixture of ZnS and SiO₂ with a molar ratio (%) of 80 : 20 having a thickness (t2) of 20 nm on the optical adjustment layer, a second recording layer formed of Bi₂O₃ having a thickness of 20 nm on the second upper protective layer, and a second lower protective layer formed of a mixture of ZnS and SiO₂ with a molar ratio (%) of 80 : 20 having a thickness of 40 nm on the second recording layer.

Next, a liquid application containing an ultraviolet curing resin (RQ1006, manufactured by Mitsubishi Rayon Co., Ltd.) is spin coated on the second information layer, to which an optical transmission stamper is attached in an atmosphere with a reduced pressure. Next, the disc is irradiated with ultraviolet from the stamper side to cure the ultraviolet curing resin. The optical transmission stamper is peeled off and another intermediate layer having a thickness of 25 µm with the same groove as that of the second substrate is formed.

Next, a first information layer is manufactured by forming an optical adjustment layer formed of Nb oxides including Nb₂O₅ having a thickness of 50 nm on the intermediate layer, a first upper protective layer formed of a mixture of ZnS and SiO₂ with a molar ratio (%) of 80 : 20 having a thickness (t1) of 20 nm on the optical adjustment layer, a first recording layer formed of Bi₂O₃ having a thickness of 20 nm on the first upper protective layer, and a first lower protective layer formed of a mixture of ZnS and SiO₂ with a molar ratio (%) of 80 : 20 having a thickness of 40 nm on the first recording layer.

Next, to form a cover layer, a cover film formed of a polycarbonate resin having a thickness of 0.09 mm is attached to the first information layer with an ultraviolet curing resin (RQ1006, manufactured by Mitsubishi Rayon Co., Ltd.) followed by irradiation of ultraviolet for curing the ultraviolet curing resin.

As described above, a WORM optical recording medium having three information layers in which the cover layer, the first information layer, the intermediate layer, the second information layer, the intermediate layer, the third information layer and the second substrate are accumulated in this order is manufactured (Refer to Fig. 11).

The optical recording medium is evaluated for a writing of random patterns with a laser beam wavelength of 405 nm, a numeric aperture NA of the objective lens of 0.85, and a clock frequency of 66 MHz while the optical recording medium is rotated at a linear speed of 4.92 m/s. Jitter of recording marks is measured for evaluation.

The result is that the jitter is 5.8 %, which satisfies the acceptability limit (7.0 % or below) for three layer structured medium for Blu-ray.

As described above, the present invention is applied not only to an optical recording medium having two information layers but also to an optical recording medium having three or more information layers.

This document claims priority and contains subject matter related to Japanese Patent Applications Nos. 2007-176743, 2007-176745, 2007-180071, and 2008-119514, filed on July 04, 2007, July 04, 2007, July 09, 2007 and May 01, 2008, respectively.

## Claims

1. An optical recording medium comprising:
a first substrate;
multiple information layers in which each of the multiple information layers except for an information layer located at a furthermost back relative to a side of laser beam irradiation comprises a recording layer, an upper protective layer and an optical adjustment layer having an absorption index k of from 0.05 to 0.20 to a light having a wavelength of 405 nm arranged in this order from the side of laser beam irradiation; and
intermediate layers provided between the multiple information layers.

2. The optical recording medium according to Claim 1, wherein the optical adjustment layer comprises an oxide of at least one element selected from the group consisting of Nb, In, Zn, Sn, Si, Al, W and Mn.

3. The optical recording medium according to Claim 2, wherein the element is Nb.

4. The optical recording medium according to any one of Claims 1 to 3, comprising the first substrate, a first information layer, the intermediate layer, a second information layer and a second substrate arranged in this order from the side of laser beam irradiation.

5. The optical recording medium according to Claim 4, wherein the second information layer comprises a recording layer comprising an inorganic material, an upper protective layer, and a reflective layer arranged in this order from the side of laser beam irradiation, the optical adjustment layer of the first information layer comprises a Nb oxide, the upper protective layer of the first information layer and the upper protective layer of the second information layer comprise a mixture of ZnS and SiO₂ with a molar ratio (%) of from 60 : 40 to 80 : 20 and the upper protective layer of the second information layer has a thickness of from 10 to 30 nm or from 80 to 120 nm.

6. The optical recording medium according to Claim 4 or 5, wherein the first information layer further comprises a lower protective layer located in front of the recording layer relative to the side of laser beam irradiation, and an aluminum oxide layer located between the first substrate and the lower protective layer.

7. The optical recording medium according to any one of Claims 1 to 6, wherein the recording layer of each of the multiple information layers except for an information layer located at a furthermost back relative to the side of laser beam irradiation comprises Bi.

8. The optical recording medium according to any one of Claims 1 to 6, wherein the recording layer of each of the multiple information layers except for an information layer located at a furthermost back from a side of laser beam irradiation comprises a Bi oxide.

9. The optical recording medium according to Claim 8, wherein the recording layer of each of the multiple information layers except for an information layer located at a furthermost back from a side of laser beam irradiation comprises at least one element which improves the light absorption index k for a light having a wavelength of 405 nm to from 0.3 to 0.9.

10. The optical recording medium according to Claim 9, wherein the at least one element which improves the light absorption index k comprises boron.

11. The optical recording medium according to Claim 10, wherein the at least one element which improves the light absorption index k further comprises Ge.

12. The optical recording medium according to Claim 9, wherein the at least one element which improves the light absorption index k comprises Cu.
